# FASCICULE DE BREVET EUROPEEN

(11) **EP 3 850 808 B1**
(45) Date de publication et mention de la délivrance du brevet: **27.09.2023**
(21) Numéro de dépôt: 19756418.0
(22) Date de dépôt: 28.08.2019
(51) Int. Cl.: H04W 4/80, H04W 12/02

(54) **PROCÉDÉ DE SURVEILLANCE OU DE SUIVI ENTRE TERMINAUX MOBILES**
KOMMUNIKATIONSVERFAHREN
COMMUNICATION METHOD

(30) Priorité: 10.09.2018 EP 18193517
(43) Date de publication de la demande: 21.07.2021
(73) Titulaire: Tissot S.A., 2400 Le Locle (CH)
(72) Inventeur: KOLLER, Jean-Marc, 1400 Yverdon-les-Bains (CH)
(74) Mandataire: ICB SA
(86) Numéro de dépôt international: PCT/EP2019/072975
(87) Numéro de publication internationale: WO 2020/052980

(56) Documents cités:
- WO-A1-2017/007719
- WO-A1-2018/088952
- US-A1- 2016 212 147
- US-A1- 2018 007 555
- US-A1- 2018 198 752
- Anonymous: "Advertising Interval - best practise - Support Center", , 17 octobre 2017 (2017-10-17), XP055566513, Extrait de l'Internet: URL:https://support.kontakt.io/hc/en-gb/ar ticles/201567802-Advertising-Interval-best -practise [extrait le 2019-03-08]

## Description

### Domaine technique et état de l'art

De manière générale, l'invention concerne la surveillance ou le suivi (en anglais « tracking ») entre terminaux mobiles au sein d'un groupe restreint de terminaux mobiles mettant en oeuvre un processus de communication sans fil (c.-à-d. sur une interface radio) comme par exemple un protocole de communication numérique de faible portée de type Bluetooth, Bluetooth Low Energy (« Bluetooth LE » ou « BLE ») ou autre. De manière plus précise, l'invention concerne un procédé de surveillance ou de suivi entre terminaux mobiles (en anglais « mobile devices ») d'un même groupe de terminaux mobiles permettant notamment de rendre la même surveillance ou le même suivi difficile voire impossible pour des terminaux mobiles ne faisant pas partie du groupe restreint.

Des systèmes de suivi de terminaux mobiles existent. Afin de permettre leur suivi et éventuellement leur localisation, les terminaux mobiles envoient des messages à l'entité qui fait le suivi. De tels systèmes souffrent toutefois fréquemment de l'inconvénient qu'un lien de communication doit être établi entre le terminal mobile suivi et l'autre entité. Un autre inconvénient réside dans le fait que les messages échangés ou diffusés peuvent permettre à des tiers de faire un suivi du terminal mobile, à l'insu et sans autorisation de ce dernier. Selon le protocole de communication, un tel suivi non autorisé pourrait être possible malgré un éventuel cryptage du contenu des messages échangés ou diffusés.

La présente invention se propose de pallier ces inconvénients.

### Description de l'invention

Un premier aspect de l'invention se rapporte à un procédé de surveillance ou de suivi entre terminaux mobiles d'un même groupe de terminaux mobiles, dans lequel :
∘ les terminaux mobiles diffusent des messages en mode diffusion générale (broadcast) sur une interface radio (ou « interface air ») en conformité avec un protocole de communication numérique de faible portée (jusqu'à 500 m ou moins, p.ex. jusqu'à 100 M, jusqu'à 10 m ou jusqu'à 5 m), les messages étant susceptibles d'être reçus par tous les autres terminaux mobiles se trouvant à proximité (du terminal émetteur) et capables de communiquer selon le protocole, les messages comprenant des données cryptées obtenues par cryptage d'au moins les éléments suivants : a) un identifiant du terminal émetteur et b) une graine à usage unique ou de faible durée de validité, les données cryptées étant décryptables uniquement par le groupe restreint de terminaux mobiles disposant d'une clé de décryptage ;
∘ des terminaux mobiles reçoivent les messages diffusés par les autres terminaux mobiles et décryptent les messages qui sont destinés à un groupe dont ils font partie ; et
∘ dans lequel, dans la mesure que le protocole de communication numérique à faible portée prévoit que le message comprend un champ d'adresse du terminal émetteur, le remplissage de ce champ par une adresse randomisée à usage unique ou à faible durée d'utilisation.

Dans le contexte de ce document, le terme « terminal mobile » désigne un appareil informatique utilisable de manière autonome, capable de communiquer selon le protocole, comme, p.ex. un téléphone mobile, un ordinateur portable, une tablette, une montre connectée (« smartwatch »), une balise, un capteur intelligent, un badge (p.ex. un badge antivol), etc.

L'adjectif « mobile » dans l'expression « terminal mobile » n'est pas censé impliquer que les terminaux mobiles participant au procédé se trouvent nécessairement en état de mouvement. Les terminaux mobiles pourraient être fixés de manière temporaire ou permanente à un objet mobile ou immobile.

Il sera apprécié que, grâce au procédé ci-dessus, les terminaux mobiles faisant partie d'un même groupe sont capables notamment de surveiller si les autres terminaux mobiles sont présents (à proximité). Une application possible du procédé consisterait, p.ex., à définir un groupe des téléphones mobiles, montres connectées et autres terminaux mobiles des membres d'une famille et pour surveiller la présence des enfants. Les terminaux mobiles des parents pourraient être configurés de sorte à donner l'alarme au cas où les messages d'un terminal d'un enfant ne serait plus reçu. Par des mesures de puissance de signal, il serait également possible d'estimer la distance à laquelle les autres terminaux se trouvent. Les terminaux mobiles pourraient être configurés de sorte à donner une alarme au cas où le signal d'un autre terminal du groupe deviendrait trop faible. Une telle application serait utile, p.ex. pour éviter de perdre de vue son enfant dans un magasin. On notera que le procédé selon l'invention permet le suivi des membres du même groupe. Les terminaux mobiles qui ne font pas partie du groupe sont incapables de décrypter le message et n'ont donc pas accès à l'identifiant transmis. En outre, étant donné que les données cryptées contiennent une graine à usage unique ou de faible durée de validité, les données cryptées et donc l'apparence des messages émis par un même terminal mobile changent relativement fréquemment. Un suivi reposant sur la détection de messages identiques (sans connaissance du contenu crypté) n'est donc pas possible. Comme, le cas échéant, le champ d'adresse de l'émetteur est rempli par une adresse randomisée (une séquence de bits pseudo-aléatoire respectant les exigences du protocole concernant le formatage de l'adresse de l'émetteur), un tiers ne pourra pas tirer d'information utile de ce champ.

De préférence, les terminaux mobiles diffusent les messages sur des canaux dédiés ou réservés à la diffusion générale par le protocole de communication. Dans le cas du BLE, les canaux « advertising » pourraient être utilisés pour la diffusion des messages.

Les messages diffusés peuvent être de petite taille. De préférence, les messages ont comme taille maximale celle qui est prévue par le protocole de communication pour les paquets transmis sur l'interface radio. De préférence, les messages diffusés dans le cadre du procédé ont une taille maximale inférieure à 200 octets, à 50 octets ou à 20 octets. La taille des messages peut être fixe (c.-à-d. la même pour tous les messages) ou libre endéans une plage autorisée.

Chaque terminal mobile participant au procédé peut être membre d'un ou de plusieurs groupes restreints. Dans les deux cas, il émet, pour chaque groupe auquel il appartient, des messages décryptables par le groupe respectif, à des intervalles réguliers ou irréguliers. Il peut être préférable d'imposer une certaine irrégularité dans les intervalles afin de rendre plus difficile à un tiers de suivre un terminal mobile par le minutage de ses émissions. De préférence, les intervalles ont une durée maximale de 2 minutes ou moins, p.ex. 1 minute ou moins, 30 s ou moins, 20 s ou moins, 10 s ou moins ou 5 s ou moins. Dans une alternative, on notera que dans l'optique de rendre le suivi tiers encore plus difficile, tous les terminaux mobiles dans ce procédé peuvent changer le contenu de leur transmission, par exemple, à la seconde 0 de chaque minute dans le cas d'un intervalle de 1 minute. De cette façon, tous ces terminaux mobiles changeront le contenu des messages en même temps, empêchant une traçabilité par le changement de contenu. Le terminal mobile pourrait également altérer légèrement la puissance d'émission lors de ce changement, afin d'empêcher un suivi tiers par la puissance de champs reçue.

Pour brouiller encore davantage ses pistes chaque terminal mobile pourrait émettre, outre les messages destinés aux groupes auxquels il appartient, des messages factices (ressemblant aux messages destinés aux membres des groupes). De cette manière, les terminaux mobiles peuvent dissimuler le nombre de groupes auxquels ils appartiennent et il sera ainsi impossible à un tiers d'identifier un terminal mobile en comptant les messages.

Selon un mode de réalisation avantageux de l'invention, la graine est dérivée d'une valeur d'horloge du terminal mobile émetteur. Cependant, toute autre valeur variable de l'état du système ou une mesure (p.ex. une puissance mesurée d'un signal électromagnétique) pourrait servir de graine, éventuellement après transformation par un générateur de nombres pseudo-aléatoires. Si le temps d'émission est transmis dans les données cryptées, les terminaux mobiles seront capables de détecter des attaques par rejeu (en anglais « replay attacks » ou « playback attacks ») en comparant le temps d'émission contenu dans le message avec le temps de réception. Si les deux diffèrent trop ou si la différence ne reste pas raisonnablement constante au fur et à mesure des messages réputés envoyés par le même terminal mobile, le terminal mobile récepteur peut donner une alarme.

De préférence, la graine a une durée de validité de deux minutes ou moins, de préférence une minute ou moins, et dans lequel l'adresse randomisée a une durée d'utilisation de deux minutes ou moins, p.ex. 1 minute ou moins, 30 s ou moins, 20 s ou moins, 10 s ou moins ou 5 s ou moins. On notera que le changement de graine doit se faire de manière à maximiser le nombre de terminaux mobiles changeant simultanément leur transmission.

L'adresse randomisée utilisée par un terminal mobile dans un message destiné à un certain groupe restreint est de préférence prédictible par les autres terminaux mobiles à partir du contenu d'un ou de plusieurs messages précédents émis par le même terminal mobile émetteur et destinés au même groupe restreint. De cette manière les terminaux mobiles peuvent plus facilement et plus rapidement identifier des messages qui leur sont destinés.

La prédictibilité des adresses randomisées facilite également les éventuelles mesures de niveau de puissance.

Un deuxième aspect de l'invention concerne un procédé de gestion de communication pour permettre à un terminal mobile de participer à ce procédé de surveillance ou de suivi tel que décrit plus haut. Un procédé de gestion selon le deuxième aspect de l'invention comprend :
∘ la gestion des messages émis, y compris :
   - la préparation des données cryptées par cryptage, au moins, d'un identifiant du terminal émetteur et d'une graine à usage unique ou de faible durée de validité, les données cryptées étant décryptables uniquement par un groupe restreint de terminaux mobiles disposant d'une clé de décryptage ;
   - la préparation et la diffusion des messages contenant les données cryptées en mode diffusion générale en conformité avec un protocole de communication numérique à faible portée,
   - dans la mesure que le protocole de communication numérique à faible portée prévoit que le message comprend un champ d'adresse du terminal émetteur, le remplissage de ce champ par une adresse randomisée à usage unique ou à faible durée d'utilisation ;
∘ la réception de messages émis par d'autres terminaux mobiles, en ce compris la tentative de décryptage des messages reçus ;
∘ la gestion des messages reçus décryptées avec succès ; et
∘ la gestion des groupes ainsi que des clés de cryptage et/ou de décryptage y associées.

La préparation et la diffusion des messages comprennent, de préférence, le cadencement de l'émission des messages à des intervalles réguliers ou irréguliers.

La préparation et la diffusion des messages peuvent également comprendre la préparation et la diffusion des messages factices afin de dissimuler le nombre de groupes auxquels appartient le terminal mobile.

Comme expliqué plus haut, la graine peut être dérivée d'une valeur d'horloge du terminal mobile, de toute autre valeur variable de l'état du système ou d'une mesure, éventuellement après transformation par un générateur de nombres pseudo-aléatoires. De préférence, la graine et l'adresse randomisée sont changées toutes les deux minutes ou à des intervalles plus courts (p.ex. à des intervalles d'une minute ou moins, de 30 s ou moins, de 20 s ou moins, de 10 s ou moins ou de 5 s ou moins). L'instant de changement sera choisi pour maximiser le nombre de terminaux mobiles changeant le contenu au même instant, en prenant, par exemple, la première minute et la première seconde de chaque heure comme point de référence. L'intervalle exacte de répétition à l'intérieur d'une fenêtre de changement pourrait être légèrement aléatoire, mais l'instant de commutation de graine devrait rester respecté.

Le procédé de gestion de communication peut comprendre la prédiction de l'adresse randomisée utilisée par un autre terminal mobile dans un message destiné à un groupe restreint dont fait partie le terminal mobile exécutant le procédé de gestion de communication, Une telle prédiction pourrait être faite à partir du contenu d'un ou de plusieurs messages précédents émis par le même autre terminal mobile et destinés au même groupe restreint.

De préférence, les données cryptées contiennent, outre l'identifiant du terminal émetteur et la graine, un secret, p.ex. une clé, un jeton (en anglais « token ») permettant aux autres terminaux mobiles du groupe restreint de prédire une adresse randomisée qui sera utilisée ultérieurement par terminal mobile exécutant le procédé de gestion de communication.

Un troisième aspect de l'invention concerne les terminaux mobiles qui sont alors des montres notamment des montres connectées, susceptibles de mettre en oeuvre un tel procédé.

Un quatrième aspect de l'invention concerne un programme d'ordinateur comprenant des instructions de code de programme pour l'exécution des étapes de ce procédé lorsque ledit programme étant exécuté par des unités de traitement des terminaux mobiles.

### Brève description des figures

D'autres particularités et caractéristiques de l'invention ressortiront de la description détaillée de certains modes de réalisation avantageux présentés ci-dessous, à titre d'illustration, avec référence aux dessins annexés qui montrent :
Fig. 1: le schéma d'un mode de réalisation possible des paquets transmis sur l'interface radio dans un procédé en accord avec l'invention ;
Fig. 2: une illustration schématique du procédé de surveillance ou de suivi entre terminaux mobiles d'un même groupe selon un mode de réalisation de l'invention.

### Description d'un mode de réalisation de l'invention

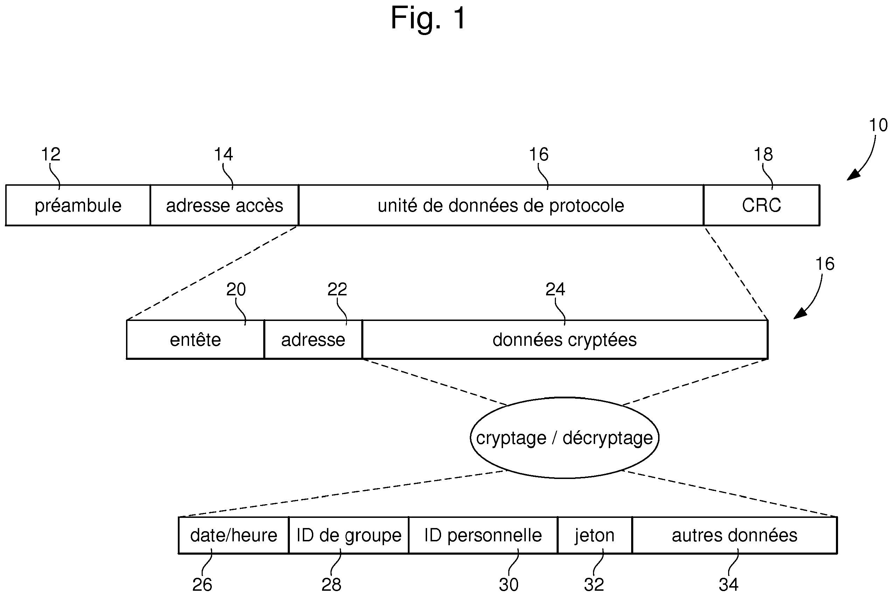

La figure 1 montre le schéma d'une mise en oeuvre possible d'un paquet 10 diffusé sur l'interface radio par les terminaux mobiles mettant en oeuvre un procédé selon le premier aspect de l'invention. Le protocole de communication numérique est avantageusement le BLE, mais tout autre protocole de communication numérique de courte distance pourrait être utilisé de manière générale.

A titre d'exemple, le paquet 10 montré à la figure 1 pourrait être diffusé sur les canaux « advertising » selon le BLE. Le paquet 10 comprend quatre champs appelés préambule (« preamble ») 12, adresse d'accès (« access address ») 14, unité de données de protocole (« PDU » ou « protocol data unit ») 16 et CRC (contrôle de redondance cyclique, « cyclic redundancy check ») 18. Le contenu des champs préambule et adresse d'accès (qui n'est pas l'adresse du terminal émetteur) est défini par le protocole BLE (voir Bluetooth Spécification Version 5.0). Le CRC est calculé en conformité avec le protocole. L'unité de données de protocole 16 est de type « advertising PDU » et contient un entête 20 ainsi qu'une charge utile (« payload »). La charge utile se compose d'un champ d'adresse (destiné à renseigner l'adresse du terminal émetteur) 22 et d'un champ de données 24. Dans ce cas, le champ d'adresse contient une adresse randomisée et les données sont cryptées, afin qu'un tiers non autorisé ne puisse identifier le terminal émetteur.

Le cryptage des données est fait de sorte à ce que seuls les membres d'un groupe restreint de terminal mobiles puissent accéder au contenu. Tout algorithme de cryptage possédant un niveau de sécurité suffisamment élevé peut être utilisé dans le cadre de l'invention. Le cryptage peut être symétrique ou asymétrique. Les membres d'un groupe possèdent la ou les clés de cryptage et de décryptage.

Les données cryptées contiennent, dans le cas du paquet 10 illustré, un identifiant du terminal émetteur (ID personnelle) 30, un identifiant du groupe (ID de groupe) 28, la date et l'heure d'émission 26, un jeton 32 et d'autres données 34. L'information de date et heure 26 sert de graine. Comme elle change régulièrement (avec une fréquence qui dépend de la précision retenue), elle sert de garantie que le cryptogramme change de temps à autre.

Parmi les données cryptées, seuls l'identifiant du terminal émetteur 30 et la graine sont obligatoires. Les autres données sont facultatives, mais peuvent être utiles pour faciliter le traitement des messages à la réception. Par exemple, le jeton 32 pourrait servir de clé permettant de prédire l'adresse randomisée qui sera utilisée prochainement par le terminal émetteur et/ou l'instant d'émission du prochain message.

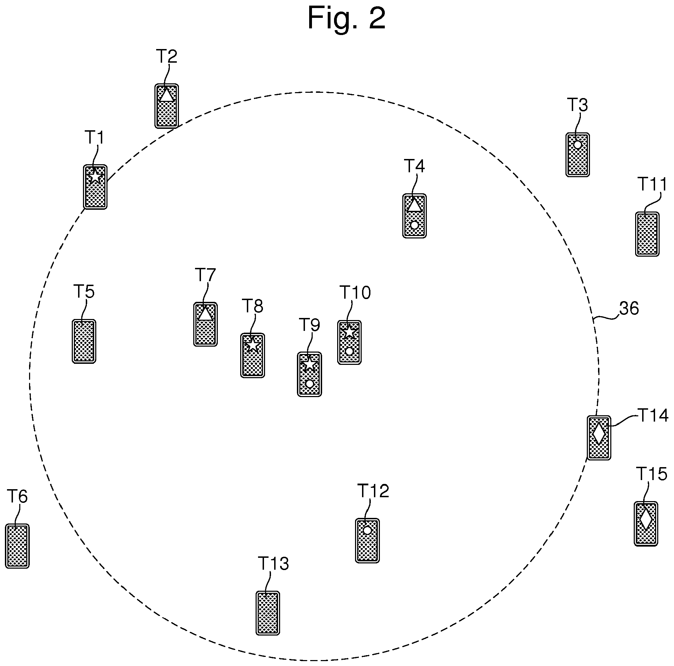

La figure 2 montre, de manière schématique, des terminaux mobiles capables de communiquer selon le protocole de de faible portée sur lequel s'appuie également le procédé selon l'invention. Certains des terminaux ont été configurés, au moyen d'une application mobile, pour pouvoir participer au procédé selon un mode de réalisation de l'invention. L'application mobile permet aux utilisateurs de créer des groupes dont les membres peuvent se suivre mutuellement. L'administration du groupe, comprenant p.ex. l'admission de nouveaux membres, la gestion de droits (pour certains types de groupes, il peut être intéressant de prévoir la possibilité de définir différents niveaux de droits parmi les membres), etc. pourrait être assurée par l'initiateur du groupe ou de manière collective. Lorsqu'un terminal mobile rejoint un groupe, il reçoit un identifiant unique dans le groupe ainsi que la ou les clés de cryptage/décryptage. Ces informations sont de préférence échangées au moyen d'une liaison de communication sécurisée.

Les terminaux mobiles participant au procédé diffusent des messages (comme ceux illustrés à la figure 1) en mode broadcast en conformité avec le protocole de communication numérique. Chaque terminal mobile émet des messages à destination de chaque groupe dont il fait partie. L'adresse du terminal émetteur est randomisée et le contenu du message est crypté. Tous les autres terminaux mobiles pouvant communiquer selon le protocole de communication et se trouvant à proximité du terminal mobile émetteur peuvent recevoir les messages. Toutefois, seuls les membres du groupe auquel le message respectif était envoyé peuvent décrypter le message et identifier le terminal qui l'a émis.

Sur la figure 2, l'appartenance des terminaux mobiles T1, T2, ..., T15 à des groupes restreints est indiquée par des symboles : étoile, triangle, cercle, losange. (Les symboles et les noms de groupe utilisés dans cette description ont été choisis uniquement pour faciliter les explications et ne sont en aucun cas à considérer comme des limitations.) Par exemple, les terminaux mobiles T2, T4 et T7 appartiennent au groupe « triangle ». Certains terminaux mobiles appartiennent à plusieurs groupes en même temps, comme p.ex. les terminaux mobiles T4 (groupes « triangle » et « cercle »), T9 (groupes « étoile » et « cercle ») et T10 (groupes « étoile » et « cercle »). D'autres terminaux mobiles n'appartiennent à aucun groupe, à savoir les terminaux T5, T6, T11 et T13.

Le cercle tracé en ligne interrompue indique la limite de la zone de réception 36 du terminal mobile T9. La portée des autres terminaux n'a pas été dessinée pour ne pas surcharger le dessin. Il convient de noter que la zone de réception de chaque terminal mobile n'est pas nécessairement circulaire ou sphérique mais dépend principalement de l'environnement du terminal respectif. Le terminal T9 transmet des messages pour le groupe « étoile » et pour le groupe « cercle ». En principe, tous les autres terminaux mobiles à l'intérieur de la zone de réception sont capables de recevoir ces messages, y compris ceux qui n'appartiennent à aucun groupe et/ou ceux qui ne sont pas configurés pour participer au procédé.

Les terminaux mobiles participant au procédé tentent de décrypter les messages entrants à l'aide des clés dont ils disposent. Le décryptage ne sera possible que pour les messages destinés aux groupes dont ils font partie. Les messages destinés au groupe « étoile » envoyés par le terminal T9 sont décryptés par les terminaux T8, T10 et, éventuellement, T1 si le message est encore reçu. Les messages destinés au groupe « cercle » envoyés par le terminal T9 sont décryptés par les terminaux T4, T10 et T12. Le terminal T3 se trouvant hors de la zone de réception 36 ne reçoit pas les messages de T9.

Chaque message contient au moins un identifiant du terminal mobile émetteur. Dans le cas le plus simple, chaque message reçu signifie dès lors pour le terminal qui l'a décrypté qu'il se trouve dans la zone de réception du terminal mobile émetteur. Comme décrit plus haut, il est possible que la charge utile des messages comporte encore d'autres données. Celles-ci peuvent en principe être librement choisies par le fournisseur de l'application mobile ou par l'administrateur du groupe (dans la mesure que fournisseur de l'application prévoit cette possibilité). De préférence, après décryptage d'un message, l'application mobile procède à certaines vérifications, notamment si le temps d'émission renseigné dans le message est plausible.

Dans le cas du message de la figure 1, la charge utile comprend un jeton 32 qui permet aux terminaux mobiles ayant décrypté le message de prédire l'adresse randomisée 22 d'un ou de plusieurs futurs messages envoyés par le même terminal mobile émetteur et destinés au même groupe. Ce jeton peut donc faciliter le traitement des futurs messages, notamment la mesure de la puissance du signal entrant. Le jeton 32 pourrait également contenir une information sur un ou plusieurs prochains instants d'émission de messages envoyés par le même terminal mobile émetteur et destinés au même groupe.

L'utilisation des messages décryptés peut être librement définie par les fournisseurs de l'application mobile. En principe, le procédé permet aux terminaux mobiles d'un groupe restreint de suivre et d'être suivi par les autres terminaux mobiles du même groupe. Dans le cas le plus simple, le suivi consiste à noter la présence ou l'absence d'un membre du groupe dans les alentours du terminal qui fait le suivi. Une alerte pourrait alors être donnée si un terminal mobile s'éloigne d'un autre membre du groupe. Dans le cas de la figure 2, le terminal T1 se trouve à la limite de la zone de réception du terminal T9. L'application mobile sur le terminal T1 pourrait être configurée pour donner une alarme sonore, visuelle ou autre à l'utilisateur de T1 quand les messages du terminal T9 ne sont plus reçus. Inversement, le terminal T9 se trouve à la limite de la zone de réception du terminal T1. L'application mobile sur le terminal T9 pourrait être configurée pour donner une alarme à l'utilisateur de T9 quand les messages du terminal T1 ne sont plus reçus.

Pour éviter que des terminaux mobiles soient suivis par des tiers non autorisés par des méthodes ne nécessitant pas de connaissances a priori sur le contenu des messages, diverses mesures peuvent être prises. La première mesure prévoit d'utiliser une graine à usage unique ou de faible durée de validité pour encrypter les messages. Dès lors, même si le reste du contenu du message ne changeait pas, le cryptogramme changerait pour chaque message transmis. Si les données cryptées renseignent l'instant d'émission, il est par ailleurs possible de détecter les attaques de rejeu.

Le nombre de groupes auquel appartient chaque terminal mobile détermine à priori combien de messages il envoie sur un intervalle de référence. Cette information pourrait permettre à un tiers de suivre un terminal mobile sans avoir connaissance du contenu des messages. Pour éviter ce type d'attaque, l'application mobile pourrait être configurée pour insérer des messages factices entre les messages destinés aux groupes et de varier la fréquence des messages factices. Alternativement ou additionnellement, l'application mobile pourrait varier les intervalles entre les messages émis par le terminal mobile. On notera que l'envoi de certains messages pourrait également être lié à des conditions horaires, comme une identification liée à une activité professionnelle pourrait être désactivée en-dehors des heures de travail.

On notera que dans un troisième aspect, l'invention porte sur les terminaux mobiles T1, ..., T15 qui sont alors chacun une montre notamment une montre connecté, susceptibles de mettre en oeuvre ce procédé. Chaque terminal mobile T1, ..., T15 comprend alors une unité de traitement participant à mettre en oeuvre un tel procédé.

Par ailleurs dans un quatrième aspect, l'invention porte sur un programme d'ordinateur comprenant des instructions de code de programme pour l'exécution des étapes de ce procédé lorsque ledit programme est exécuté par des unités de traitement des terminaux mobiles T1, ..., T15.

Alors que des modes de réalisation particuliers viennent d'être décrits en détail, l'homme du métier appréciera que diverses modifications et alternatives à ceux-là puissent être développées à la lumière de l'enseignement global apporté par la présente divulgation de l'invention. Par conséquent, les agencements et/ou procédés spécifiques décrits ci-dedans sont censés être donnés uniquement à titre d'illustration, sans intention de limiter la portée de l'invention.

## Revendications

1. Procédé de surveillance ou de suivi entre terminaux mobiles (T1, ..., T15) d'un même groupe de terminaux mobiles, dans lequel
∘ des terminaux mobiles (T1, ..., T15) diffusent des messages (10) en mode diffusion générale sur une interface radio en conformité avec un protocole de communication numérique de faible portée, les messages étant susceptibles d'être reçus par tous les autres terminaux mobiles (T1, ..., T15) se trouvant à proximité et capables de communiquer selon ledit protocole, les messages (10) comprenant des données cryptées (24) obtenues par cryptage, au moins, d'un identifiant du terminal émetteur (30) et d'une graine à usage unique ou de faible durée de validité (26), les données cryptées (24) étant décryptables uniquement par un groupe restreint de terminaux mobiles disposant d'une clé de décryptage ;
∘ des terminaux mobiles (T1, ..., T15) reçoivent les messages diffusés par les autres terminaux mobiles et décryptent les messages qui sont destinés à un groupe dont ils font partie ; et
∘ dans lequel, dans la mesure que le protocole de communication numérique à faible portée prévoit que le message comprend un champ d'adresse du terminal émetteur, le remplissage de ce champ par une adresse randomisée (22) à usage unique ou à faible durée d'utilisation,
et en ce que les terminaux mobiles (T1, ..., T15) émettent, outre les messages (10) destinés aux groupes auxquels ils appartiennent, des messages factices afin de dissimuler le nombre de groupes auxquels appartient chaque terminal mobile.

2. Procédé selon la revendication 1, dans lequel les terminaux mobiles (T1, ..., T15) diffusent les messages (10) sur des canaux dédiés ou réservés à la diffusion générale par le protocole de communication.

3. Procédé selon la revendication 1 ou 2, dans lequel les terminaux mobiles (T1, ..., T15) émettent, pour chaque groupe auquel ils appartiennent, des messages décryptables par le groupe respectif, à des intervalles réguliers ou irréguliers.

4. Procédé selon la revendication 3, dans lequel les intervalles ont une durée maximale de 2 minutes ou moins.

5. Procédé selon l'une quelconque des revendications 1 à 4, dans lequel la graine (26) est dérivée d'une valeur d'horloge du terminal mobile.

6. Procédé selon l'une quelconque des revendications 1 à 5, dans lequel la graine (26) a une durée de validité de deux minutes ou moins, de préférence une minute ou moins, et dans lequel l'adresse randomisée a une durée d'utilisation de deux minutes ou moins, de préférence une minute ou moins.

7. Procédé selon l'une quelconque des revendications 1 à 6, dans lequel l'adresse randomisée (22) utilisée par un terminal mobile dans un message destiné à un certain groupe restreint est prédictible par les autres terminaux mobiles à partir du contenu d'un ou de plusieurs messages (10) précédents émis par le même terminal mobile émetteur et destinés au même groupe restreint.

8. Procédé de gestion de communication pour permettre à un terminal mobile (T1, ..., T15) de participer à un procédé selon l'une quelconque des revendications 1 à 7, comprenant :
∘ la gestion des messages (10) émis, y compris :
∘ la préparation des données cryptées (24) par cryptage, au moins, d'un identifiant du terminal émetteur (30) et d'une graine à usage unique ou de faible durée de validité (26), les données cryptées (24) étant décryptables uniquement par un groupe restreint de terminaux mobiles (T1, ..., T15) disposant d'une clé de décryptage ;
∘ la préparation et la diffusion des messages (10) contenant les données cryptées (24) en mode diffusion générale en conformité avec un protocole de communication numérique à faible portée, ladite préparation et ladite diffusion des messages (10) comprennent la préparation et la diffusion de messages factices afin de dissimuler le nombre de groupes auxquels appartient le terminal mobile ;
∘ dans la mesure que le protocole de communication numérique à faible portée prévoit que le message comprend un champ d'adresse du terminal émetteur, le remplissage de ce champ par une adresse randomisée (22) à usage unique ou à faible durée d'utilisation ;
∘ la réception de messages (10) émis par d'autres terminaux mobiles, en ce compris la tentative de décryptage des messages reçus ;
∘ la gestion des messages (10) reçus décryptées avec succès ; et
∘ la gestion des groupes ainsi que des clés de cryptage et/ou de décryptage y associées.

9. Procédé selon la revendication 8, dans lequel la préparation et la diffusion des messages (10) comprennent le cadencement de l'émission des messages à des intervalles réguliers ou irréguliers.

10. Procédé selon l'une quelconque des revendications 8 à 9, dans lequel la graine (26) est dérivée d'une valeur d'horloge du terminal mobile.

11. Procédé selon l'une quelconque des revendications 8 à 10, dans lequel la graine (26) et l'adresse randomisée (22) sont changées toutes les deux minutes ou à des intervalles plus courts.

12. Procédé selon l'une quelconque des revendications 8 à 11, comprenant la prédiction de l'adresse randomisée (22) utilisée par un autre terminal mobile (T1, ..., T15) dans un message destiné à un groupe restreint dont fait partie le terminal mobile (T1, ..., T15) exécutant le procédé de gestion de communication à partir du contenu d'un ou de plusieurs messages (10) précédents émis par le même autre terminal mobile (T1, ..., T15) et destinés au même groupe restreint.

13. Procédé selon l'une quelconque des revendications 8 à 12, dans lequel les données cryptées (24) contiennent, outre l'identifiant du terminal émetteur (30) et la graine (26), un secret (32) permettant aux autres terminaux mobiles du groupe restreint de prédire une adresse randomisée (22) qui sera utilisée par terminal mobile exécutant le procédé de gestion de communication.

14. Terminaux mobiles (T1, ..., T15) étant chacun une montre notamment une montre connecté susceptibles de mettre en oeuvre le procédé selon l'une quelconque des revendications précédentes.

15. Programme d'ordinateur comprenant des instructions de code de programme pour l'exécution des étapes du procédé selon l'une quelconque des revendications 1 à 13 lorsque ledit programme est exécuté par des unités de traitement des terminaux mobiles (T1, ..., T15).

## Patentansprüche

1. Verfahren zur Überwachung oder Verfolgung zwischen mobilen Terminals (T1, ..., T15) einer gleichen Gruppe von mobilen Terminals, wobei
- Mobile Terminals (T1, ..., T15) Nachrichten (10) im allgemeinen Übermittlungsmodus über eine Funkschnittstelle übermitteln, die mit einem numerischen Kommunikationsprotokoll mit geringer Reichweite konform ist, wobei die Nachrichten von allen anderen mobilen Terminals (T1, ..., T15), die sich in der Nähe befinden und imstande sind, gemäß dem Protokoll zu kommunizieren, empfangen werden können, wobei die Nachrichten (10) verschlüsselte Daten (24) umfassen, die durch Verschlüsselung mindestens einer Identifikation des Sendeterminals (30) und eines Seeds für Einmalgebrauch oder von kurzer Gültigkeitsdauer (26) erhalten werden, wobei die verschlüsselten Daten (24) nur von einer ausgewählten Gruppe mobiler Terminals, die über einen Entschlüsselungsschlüssel verfügen, entschlüsselbar sind;
- ∘ Mobile Terminals (T1, ..., T15) die Nachrichten empfangen, die von anderen mobilen Terminals übermitteln werden, und Nachrichten entschlüsseln, die für eine Gruppe bestimmt sind, von der sie ein Teil sind; und
- ∘ wobei, soweit das numerische Kommunikationsprotokoll mit geringer Reichweite vorsieht, dass die Nachricht ein Adressfeld des Sendeterminals umfasst, das Ausfüllen dieses Feldes mit einer randomisierten Adresse (22) für den Einmalgebrauch oder von kurzer Gebrauchsdauer,
und dass die mobilen Terminals (T1, ..., T15), zusätzlich zu den Nachrichten (10), die für die Gruppen bestimmt sind, zu denen sie gehören, fiktive Nachrichten übermitteln, um die Anzahl der Gruppen zu verbergen, zu denen jedes mobile Terminal gehört.

2. Verfahren nach Anspruch 1, wobei die mobilen Terminals (T1, ..., T15) die Nachrichten (10) auf Kanälen übermitteln, die für die allgemeine Übertragung durch das Kommunikationsprotokoll vorgesehen oder reserviert sind.

3. Verfahren nach Anspruch 1 oder 2, wobei die mobilen Terminals (T1, ..., T15), für jede Gruppe, zu der sie gehören, Nachrichten senden, die von der jeweiligen Gruppe in regelmäßigen oder unregelmäßigen Intervallen entschlüsselt werden können.

4. Verfahren nach Anspruch 3, wobei die Intervalle eine Dauer von höchstens 2 Minuten oder weniger haben.

5. Verfahren nach einem der Ansprüche 1 bis 4, wobei der Seed (26) von einem Taktwert des mobilen Terminals abgeleitet wird.

6. Verfahren nach einem der Ansprüche 1 bis 5, wobei der Seed (26) eine Gültigkeitsdauer von zwei Minuten oder weniger hat, vorzugsweise von einer Minute oder weniger, und wobei die randomisierte Adresse eine Gebrauchsdauer von zwei Minuten oder weniger hat, vorzugsweise von einer Minute oder weniger.

7. Verfahren nach einem der Ansprüche 1 bis 6, wobei die randomisierte Adresse (22), die von einem mobilen Terminal in einer Nachricht verwendet wird, die für eine gewisse ausgewählte Gruppe bestimmt ist, von den anderen mobilen Terminals anhand des Inhalts einer oder mehrerer vorhergehender Nachrichten (10), die von demselben mobilen Terminal gesendet wurden und für dieselbe ausgewählte Gruppe bestimmt sind, vorhersagbar ist.

8. Verfahren zur Kommunikationsverwaltung, um einem mobilen Terminal (T1, ..., T15) zu ermöglichen, an einem Verfahren nach einem der Ansprüche 1 bis 7 teilzunehmen, umfassend:
- Die Verwaltung der gesendeten Nachrichten (10), einschließlich:
- Die Bereitstellung der verschlüsselten Daten (24) durch Verschlüsselung mindestens einer Identifikation des Sendeterminals (30) und eines Seeds für Einmalgebrauch oder von kurzer Gültigkeitsdauer (26), wobei die verschlüsselten Daten (24) nur von einer ausgewählten Gruppe mobiler Terminals (T1, ..., T15) entschlüsselbar sind, die über einen Entschlüsselungsschlüssel verfügen;
- die Bereitstellung und die Übermittlung von Nachrichten (10), die die verschlüsselten Daten (24) enthalten, im allgemeinen Übermittlungsmodus, der mit einem numerischen Kommunikationsprotokoll mit geringer Reichweite konform ist, wobei die Bereitstellung und die Übermittlung von Nachrichten (10) die Bereitstellung und die Übermittlung von fiktiven Nachrichten umfasst, um die Anzahl der Gruppen zu verbergen, zu denen das mobile Terminal gehört;
- soweit das numerische Kommunikationsprotokoll mit geringer Reichweite vorsieht, dass die Nachricht ein Adressfeld des Sendeterminals umfasst, das Ausfüllen dieses Feldes mit einer randomisierten Adresse (22) für den Einmalgebrauch oder von kurzer Gebrauchsdauer;
- Empfangen von Nachrichten (10), die von anderen mobilen Terminals gesendet werden, einschließlich des Versuchs, empfangene Nachrichten zu entschlüsseln;
- die Verwaltung von empfangenen Nachrichten (10), die erfolgreich entschlüsselt wurden; und
- die Verwaltung von Gruppen sowie von Verschlüsselungs- und/oder Entschlüsselungsschlüssel, die damit assoziiert sind.

9. Verfahren nach Anspruch 8, wobei die Bereitstellung und Übermittlung der Nachrichten (10) das Takten der Emission der Nachrichten in regelmäßigen oder unregelmäßigen Intervallen umfasst.

10. Verfahren nach einem der Ansprüche 8 bis 9, wobei der Seed (26) von einem Taktwert des mobilen Terminals abgeleitet wird.

11. Verfahren nach einem der Ansprüche 8 bis 10, wobei der Seed (26) und die randomisierte Adresse (22) alle zwei Minuten oder in kürzeren Intervallen gewechselt werden.

12. Verfahren nach einem der Ansprüche 8 bis 11, die Vorhersage der randomisierten Adresse (22) umfassend, die von einem anderen mobilen Terminal (T1, ..., T15) in einer Nachricht verwendet wird, die für eine ausgewählt Gruppe bestimmt ist, von der das mobile Terminal (T1, ..., T15) ein Teil ist, das das Verfahren zur Kommunikationsverwaltung anhand des Inhalts einer oder mehrerer vorhergehender Nachrichten (10) ausführt, die von demselben anderen mobilen Terminal (T1, ..., T15) gesendet wurden und für dieselbe ausgewählte Gruppe bestimmt sind.

13. Verfahren nach einem der Ansprüche 8 bis 12, wobei die verschlüsselten Daten (24), zusätzlich zur Identifikation des Sendeterminals (30) und dem Seed (26), ein Geheimnis (32) enthalten, das den anderen mobilen Terminals der ausgewählten Gruppe ermöglicht, eine randomisierte Adresse (22) vorherzusagen, die vom mobilen Terminal verwendet wird, das das Verfahren zur Kommunikationsverwaltung ausführt.

14. Mobile Terminals (T1, ..., T15), die jeweils eine Armbanduhr sind, insbesondere eine Smartwatch, die das Verfahren nach einem der vorhergehenden Ansprüche durchführen kann.

15. Computerprogramm, das Programmcode-Anweisungen zum Ausführen von Verfahrensschritten nach einem der Ansprüche 1 bis 13 umfasst, wenn das Programm von Verarbeitungseinheiten der mobilen Terminals (T1, ..., T15) ausgeführt wird.

## Claims

1. Method for monitoring or tracking between mobile devices (T1, ..., T15) of a same group of mobile devices, wherein
- mobile devices (T1, ..., T15) broadcast messages (10) in general broadcast mode over a radio interface in compliance with a short-range digital communication protocol, the messages being able to be received by all the other mobile devices (T1, ..., T15) in the vicinity and capable of communicating according to said protocol, the messages (10) comprising encrypted data (24) obtained by encryption of, at least, an identifier of the emitter device (30) and a seed (26) intended for single use or having a short period of validity, the encrypted data (24) only being able to be decrypted by a limited group of mobile devices possessing a decryption key;
- mobile devices (T1, ..., T15) receive the messages broadcast by the other mobile devices and decrypt the messages intended for a group to which they belong; and
- wherein, if the protocol for short-range digital communication provides that the message comprises a field for the address of the emitter device, this field is filled with a randomised address (22) intended for single use or having a short period of use,
and in that the mobile devices (T1, ..., T15) emit, in addition to the messages (10) intended for the groups to which they belong, dummy messages in order to conceal the number of groups to which each mobile device belongs.

2. Method according to claim 1, wherein the mobile devices (T1, ..., T15) broadcast the messages (10) on channels dedicated to or reserved for general broadcasting by the communication protocol.

3. Method according to claim 1 or 2, wherein the mobile devices (T1, ..., T15) emit, for each group to which they belong, messages that can be decrypted by the respective group, at regular or irregular intervals.

4. Method according to claim 3, wherein the intervals have a maximum duration of 2 minutes or less.

5. Method according to any one of claims 1 to 4, wherein the seed (26) is derived from a clock value of the mobile device.

6. Method according to any one of claims 1 to 5, wherein the seed (26) has a period of validity of two minutes or less, preferably one minute or less, and wherein the randomised address has a period of use of two minutes or less, preferably one minute or less.

7. Method according to any one of claims 1 to 6, wherein the randomised address (22) used by a mobile device in a message intended for a certain limited group can be predicted by the other mobile devices based on the content of one or more preceding messages (10) emitted by the same emitter mobile device and intended for the same limited group.

8. Method for communication management in order to allow a mobile device (T1, ..., T15) to participate in a method according to any one of claims 1 to 7, comprising:
- managing emitted messages (10), including:
- preparing encrypted data (24) by encryption of, at least, an identifier of the emitter device (30) and a seed (26) intended for single use or having a short period of validity, the encrypted data (24) only being able to be decrypted by a limited group of mobile devices (T1, ..., T15) possessing a decryption key;
- preparing and broadcasting messages (10) containing encrypted data (24) in general broadcast mode in compliance with a short-range digital communication protocol, said preparation and said broadcasting of messages (10) comprise the preparation and broadcasting of dummy messages in order to conceal the number of groups to which the mobile device belongs;
- if the protocol for short-range digital communication provides that the message comprises a field for the address of the emitter device, this field is filled with a randomised address (22) intended for single use or having a short period of use;
- receiving messages (10) emitted by other mobile devices, including the attempt to decrypt the received messages;
- managing successfully decrypted received messages (10); and
- managing the groups as well as the encryption and/or decryption keys associated therewith.

9. Method according to claim 8, wherein the preparation and broadcasting of messages (10) comprise the timing of the emission of messages at regular or irregular intervals.

10. Method according to any one of claims 8 to 9, wherein the seed (26) is derived from a clock value of the mobile device.

11. Method according to any one of claims 8 to 10, wherein the seed (26) and the randomised address (22) are changed every two minutes or at shorter intervals.

12. Method according to any one of claims 8 to 11, comprising the prediction of the randomised address (22) used by another mobile device (T1, ..., T15) in a message intended for a limited group to which the mobile device (T1, ..., T15) belongs, executing the communication management method based on the content of one or more preceding messages (10) emitted by the same other mobile device (T1, ..., T15) and intended for the same limited group.

13. Method according to any one of claims 8 to 12, wherein the encrypted data (24) contains, in addition to the identifier of the emitter device (30) and the seed (26), a secret (32) enabling the other mobile devices of the limited group to predict a randomised address (22) which will be used by the mobile device executing the communication management method.

14. Mobile devices (T1, ..., T15) each being a watch, in particular a smartwatch, which is able to implement the method according to any one of the preceding claims.

15. Computer program comprising program code instructions for executing steps of a method according to any one of claims 1 to 13, when said program is executed by processing units of the mobile devices (T1, ..., T15).
